# EUROPÄISCHE PATENTSCHRIFT

(11) **EP 0 447 834 B1**
(45) Veröffentlichungstag und Bekanntmachung des Hinweises auf die Patenterteilung: **06.04.1994**
(21) Anmeldenummer: 91102642.5
(22) Anmeldetag: 22.02.1991
(51) Int. Cl.: F16L 3/22

(54) **Vorrichtung zur Befestigung von Kabeln**
Supporting device for cables
Support de fixation de câbles

(30) Priorität: 20.03.1990 DE 4009297
(43) Veröffentlichungstag der Anmeldung: 25.09.1991
(73) Patentinhaber: KRONE Aktiengesellschaft, D-14167 Berlin (DE)
(72) Erfinder: Hegner, Gunter, W-1000 Berlin 27 (DE); Delakowitz, Bernd, W-1000 Berlin 20 (DE)

(56) Entgegenhaltungen:
- DE-A- 2 505 628
- NL-A- 7 507 979
- US-A- 4 395 009

## Beschreibung

Die Erfindung bezieht sich auf eine Vorrichtung zur Befestigung von mindestens einem Kabel, insbesondere Fernmelde- und Datenkabeln an Gestellen oder Gehäusen von fernmeldetechnischen Einrichtungen, mit mindestens zwei parallel zueinander angeordneten Zahnstangen.

Allgemein sind Vorrichtungen zur Befestigung von Kabeln an Gestellen oder Gehäuse von fernmeldetechnischen Einrichtungen bekannt, die mittels Bindegarn, Kabelbindern oder Schellen an den Gestellteilen befestigt werden. Dies hat jedoch den Nachteil, daß Bindegarn oder Kabelbinder unter beengten Platzbedarf sehr schlecht handhabbar ist und wegen Ihrer Wandstärken und Verschrauben viel Platz beanspruchen. Für Kabel mit verschiedenen Kabeldurchmessern sind Schellen unterschied-licher Größe notwendig.

Aus der NL-A-7 507 979 ist eine Befestigungsvorrichtung vorbekannt, die aus einem einteiligen in Querschnitt U-förmig oder H-förmig ausgebildeten Aufnahmeteil besteht. Zwei Schenkel der Befestigungsvorrichtung sind mit einer Zahnstange versehen zwischen dem eine starre Platte einrastbar ist. Der Nachteil der Vorrichtung besteht darin, daß die Kabel den Raum zwischen den Zahnstangen ausfüllen müssen, da die Kabel sonst nicht sicher geklemmt werden. Ein weiterer Nachteil besteht darin, daß die Befestigungsvorrichtung nicht aneinander reihbar ist.

Aufgabe der Erfindung ist es daher, eine Vorrichtung der gattungsgemäßen Art zu schaffen, die auch unter beengtem Platzverhältnissen eine einfach zu handhabende Befestigung von Kabeln mit verschiedenen Durchmessern an Gestellen oder in Gehäusen ermöglicht und entsprechend der Anzahl der zu befestigenden Kabel erweiterbar ist. Ein Entfernen der Kabel von den Gestellteilen soll möglich sein.

Die Lösung dieser Aufgabe ergibt sich aus den kennzeichnenden Merkmalen des Anspruches 1. Durch die erfindungsgemäße Ausbildung der Befestigungsvorrichtung mit Winkelstücken kann die Befestigungsvorrichtung durch eine Aneinanderreihung in einer beliebigen Anzahl von Winkelstücken beliebig erweitert werden. Ein Entfernen der Kabel ist durch Ziehen des Federelementes entgegen der Pfeilrichtung A möglich, so daß am Gestellteil befestigte Kabel auch nachträglich wieder entfernt werden können.

Weitere vorteilhafte Ausgestaltungen in der Erfindung ergeben sich aus den Unteransprüchen.

Die Erfindung ist nachfolgend anhand eines Ausführungsbeispiels näher erläutert. Es zeigen:
- Fig. 1: einen Horizontalschnitt durch das Gestellteil und den befestigten Kabeln und
- Fig. 2: eine perspektivische Darstellung der Winkelstücke der Befestigungsvorrichtung

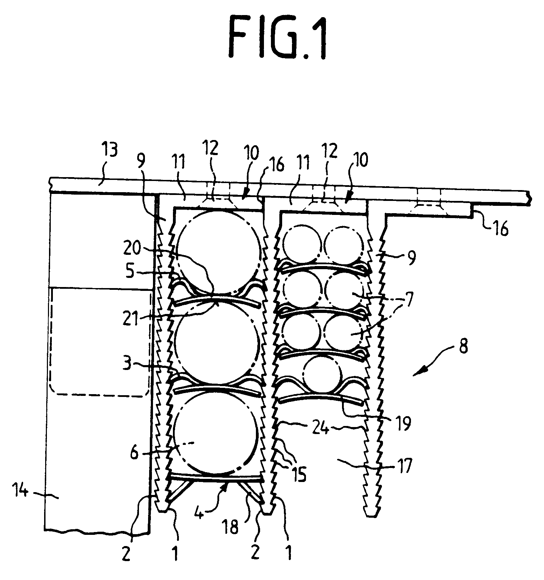

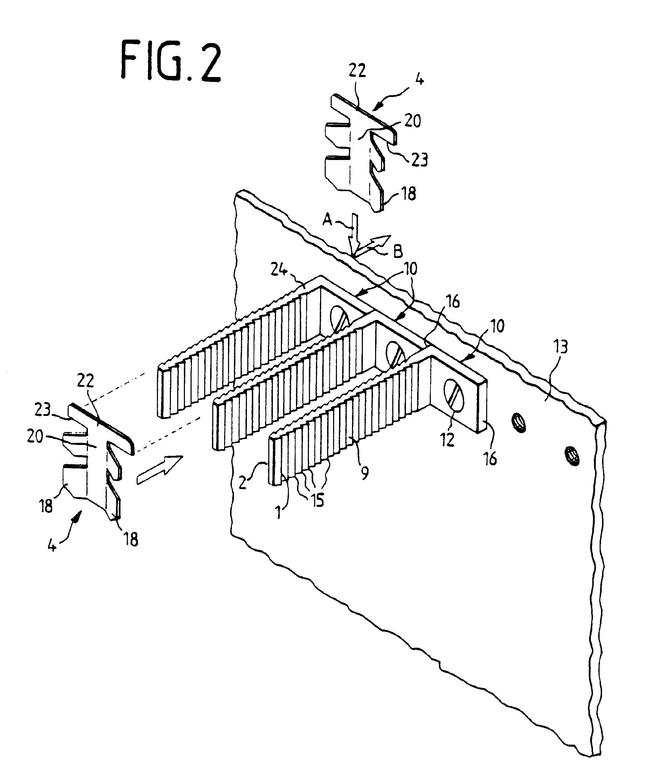

Wie die Fig. 1 zeigt, bestehen die Mittel der Befestigungseinrichtung 8 aus Zahnstangen 1,2 und aus mindestens einem Federelement 3. Die Zahnstangen 1,2 sind an den längeren Schenkelseiten 9 eines Winkelstückes 10 angeordnet, wie auch Fig. 2 zeigt.

Das kürzere Schenkelende 11 ist mit einer Bohrung 12 versehen, so daß das Winkelstück 10 an einem Gestellteil 13 mittels Schrauben oder mittels einer Nietverbindung befestigbar ist. Das Gestellteil 13 ist mit einem Gestellrahmen 14 verbunden, wobei mehrere Gestellrahmen ein Verteilergestell bilden.

Das Federelement 3,4 besteht aus einer metallischen Klammer 19 mit einem Mittelteil 20 und mit zwei Enden 5,18. Die Enden 5 des Federelementes 3 sind bogenförmig und die Enden 18 des Federelementes 4 geradlinig ausgebildet. Wie in der Fig. 1 dargestellt ist, besitzt das längere Schenkelende 9 des Winkelstückes 10 beidseitig angeordnete Zahnstangen 1,2.

Zur Befestigung der Kabel 6,7 an das Gestellteil 13 werden die Winkelstücke 10 am Gestellteil 13 befestigt, wobei das kürzere Schenkelende 11 am Gestellteil 13 angeschraubt wird. Das längere Schenkelende 9 des Winkelstückes 10 ist freistehend nach vorne gerichtet. Unmittelbar an die Stirnseite 16 des kürzeren Schenkelendes 11 werden die weiteren Winkelstück 10 befestigt, so daß mehrere Schenkelenden 9 parallel nebeneinander angeordnet sind. Zwischen den Schenkelenden 9 werden Aufnahmeräume 17 gebildet, die durch die beidseitig angeordneten Zahnstangen 1,2 begrenzt sind. Die Zähne 15 zweier Zahnstangen 1,2 zweier Winkelstücke 10 sind somit zueinander gerichtet. In die Aufnahmeräume 17 werden die Kabel 6, eingelegt und mittels der Federelemente 3,4 befestigt. Die Federelemente 3,4 werden hierbei in Pfeilrichtung A zwischen zwei Zahnstangen 1,2 eingeschoben und in Pfeilrichtung B an das Kabel 6 angedrückt. Hierbei klemmen die äußeren Enden 5,18 der Federelemente 3,4 jeweils zwischen zwei Zähnen 15 der Zahnstangen 1 und 2 ein und klemmen das Kabel 6,7 fest. Wie die Figur 1 zeigt, können mehrere Kabel 6 innerhalb eines Aufnahmeraumes 17 hintereinander zwischen den Zahnstangen 1 und 2 befestigt werden. Des weiteren ist dargestellt, daß das Federelement 3 bogenförmige Enden 5 aufweist. Das Kabel 6 liegt einerseits zwischen den bogenförmigen Enden 5 am Mittelteil 20 und anderseits an einer Anlagefläche 21 an.

Das Federelement 4 weist geradlinig abgebogene Enden 18 auf, die vom Mittelteil 20 abgebogen sind. Zur besseren Klemmung kann das Federelement 4 auch vier Enden 18 aufweisen, die zwischen den Zähnen 15 der Zahnstange 1,2 einrasten. Am oberen Ende ist das Federelement 4 mit einem Anschlag 22 versehen, deren untere Seitenflächen 23 auf den Schmalseiten 24 der längeren Schenkelenden 9 der Winkelstücke 10 aufliegen und ein weiteres Eindrücken des Federelementes 3,4 in Pleirichtung A verhindern. Der Anschlag dient auch zur Führung beim Einschieben und beim Abziehen des Federelementes. Wie weiterhin dargestellt ist, können auch zwei Kabel 7, die nebeneinander liegen mittels eines Federelementes 3,4 zwischen den Zahnstangen 1,2 befestigt werden. In vorteilhafter Weise lassen sich somit eine Vielzahl von Kabeln mit unterschiedlichsten Kabeldurchmessern am Gestellteil 13 befestigen.

### BEZUGSZEICHENLISTE

- 1,2: Zahnstange
- 3,4: Ferderelement
- 5: Enden
- 6,7: Kabel
- 8: Befestigungsvorrichtung
- 9: längeres Schenkelende
- 10: Winkelstück
- 11: kürzeres Schenkelende
- 12: Bohrung 13
- 13: Gestellteil
- 14: Gestellrahmen
- 15: Zähne
- 16: Stirnseite
- 17: Aufnahmeräume
- 18: Enden
- 19: Klammer
- 20: Mittelteil
- 21: Anlagefläche
- 22: Anschlag
- 23: Seitenfächen
- 24: Schmalseiten

## Patentansprüche

1. Vorrichtung zur Befestigung von mindestens einem Kabel (6,7), insbesondere Fernmelde- und Datenkabel, an Gestellen (13,14) oder Gehäusen von fernmeldetechnischen Einrichtungen, mit mindestens zwei parallel zueinander angeordneten Zahnstangen (1,2),
**dadurch gekennzeichnet,**
daß die Befestigungseinrichtung (8) aus zwei Winkelstücken (10) bestehen, die jeweils beidseitig Zahnstangen (1,2) an einer Schenkelseite (9) des Winkelstückes (10) aufweisen, wobei die innere Zahnstange (1) des ersten Winkelstückes (10) zu der äußeren Zahnstange (2) des zweiten Winkelstückes (10) gerichtet ist, so daß zwischen den Zahnstangen (1,2) zweier Winkelstücke (10) mindestens ein Kabel (6) einlegbar und mittels eines zwischen den Zahnstangen (1,2) klemmbaren Federelementes (3,4) befestigbar ist.

2. Vorrichtung nach den Ansprüchen 1,
**dadurch gekennzeichnet**,
daß das Federelement (3,4) aus einer Klammer (19) mit einem Mittelteil (20) und mit zwei Enden (5,18) gebildet ist, die jeweils zwischen zwei Zähnen (15) der Zahnstange (1,2) eingreifen.

3. Vorrichtung nach den vorhergehenden Ansprüchen,
**dadurch gekennzeichnet**,
daß die Enden (5) des Federelementes (3) bogenförmig ausgebildet sind.

4. Vorrichtung nach den vorhergehenden Ansprüchen,
**dadurch gekennzeichnet**,
daß das Kabel zwischen den Enden (5,18) und dem Mittelteil (20) einerseits und einer Anlagefläche (21) andererseits klemmend befestigt ist.

5. Vorrichtung nach den vorhergehenden Ansprüchen,
**dadurch gekennzeichnet**,
daß mehrere Kabel (6,7) hintereinander durch mehrere Federelemente (3,4) zwischen den Zahnstangen (1,2) innerhalb eiens Aufnahmeraumes (17) befestigt sind.

6. Vorrichtung nach den vorhergehenden Ansprüchen,
**dadurch gekennzeichnet**,
daß mehrere Kabel (7) mittels eines Federelementes (3,4) befestigbar sind.

## Claims

1. A supporting device for at least one cable (6, 7), in particular for telecommunication and data cables, at bays (13, 14) or casings of telecommunication installations having at least two parallely disposed spur racks (1, 2), characterized by that the supporting device (8) is composed of two angular pieces (10) comprising each spur racks (1, 2) at either side at one leg side (9) of the angular piece (10), the inner spur rack (1) of the first angular piece (10) being directed towards the outer spur rack (2) of the second angular piece (10), so that between the spur racks (1, 2) of two angular pieces (10), at least one cable (6) can be inserted and can be supported by means of a spring member (3, 4) to be clamped between the spur racks (1, 2).

2. A device according to claim 1, characterized by that the spring member (3, 4) is formed of a bracket (19) with a central portion (20) and two ends (5, 18) engaging each between two teeth (15) of the spur rack (1, 2).

3. A device according to the preceding claims, characterized by that the ends (5) of the spring member (3) are curved.

4. A device according to the preceding claims, characterized by that the cable is supported in clamping manner between the ends (5, 18) and the central portion (20), on one hand, and a support surface (21), on the other hand.

5. A device according to the preceding claims, characterized by that several cables (6, 7) are supported behind each other by several spring members (3, 4) between the spur racks (1, 2) within a reception space (17).

6. A device according to the preceding claims, characterized by that several cables (7) can be supported by means of a spring member (3, 4).

## Revendications

1. Support de fixation de câbles d'au moins un câble (6,7), essentiellement câbles de télécommunication et de données sur des bâtis (13,14) ou des boîtiers de dispositifs de la technique de télécommunication, avec au moins deux crémaillères (1,2) à disposition parallèle,
**caractérisé en ce que**
les dispositifs de fixation (8) consistent en deux pièces coudées (10) présentant, respectivement des deux côtés, des crémaillères (1,2) sur un côté des branches (9) de la pièce coudée (10), la crémaillère intérieure (1) de la première pièce coudée (10) étant dirigée vers la crémaillère extérieure (2) de la deuxième pièce coudée (10), de sorte qu'au moins un câble (6) peut être placé entre les crémaillères (1,2) de deux pièces coudées (10) et fixé au moyen d'un élément élastique (3,4) pouvant être serré entre les crémaillère (1,2).

2. Support selon la revendication 1,
**caractérisé en ce que**
l'élément élastique (3,4) est formé par une agrafe (19) avec une partie médiane (20) et deux extrémités (5, 18) engrènant respectivement entre deux dents (15) de la crémaillère (1,2).

3. Support selon l'une des revendications précédentes,
**caractérisé en ce que**
les extrémités (5) de l'élément élastique (3) sont en forme d'arc.

4. Support selon l'une des revendications précédentes,
**caractérisé en ce que**
le câble est fixé de façon serrée entre les extrémités (5,18) et la partie médiane (20) d'une part, et une surface d'appui (21) d'autre part.

5. Support selon l'une des revendications précédentes,
**caractérisé en ce que**
plusieurs câbles (6,7) sont fixés l'un derrière l'autre au moyen de plusieurs éléments élastiques (3,4) entre les crémaillères (1,2) à l'intérieur d'un espace de réception (17).

6. Support selon l'une des revendications précédentes,
**caractérisé en ce que**
plusieurs câbles (7) peuvent être fixés au moyen d'un élément élastique (3,4).
